## Europäisches Patentamt

## European Patent Office

## Office européen des brevets

(19)

(11) Veröffentlichungsnummer: **0 116 662**
**B1**

(12) # EUROPÄISCHE PATENTSCHRIFT

(45) Veröffentlichungstag der Patentschrift:
01.04.87

(51) Int. Cl.⁴: **A 01 D 43/10**

(21) Anmeldenummer: **83101550.8**

(22) Anmeldetag: **18.02.83**

(54) Landmaschine mit einem Mähwerk und einer Konditioniereinrichtung.

(43) Veröffentlichungstag der Anmeldung:
**29.08.84 Patentblatt 84/35**

(45) Bekanntmachung des Hinweises auf die Patenterteilung:
**01.04.87 Patentblatt 87/14**

(84) Benannte Vertragsstaaten:
**AT BE CH DE FR GB IT LI NL**

(56) Entgegenhaltungen:
**WO - A - 81/02966**
**AT - B - 349 810**
**DE - A - 2 750 094**
**FR - A - 2 078 348**
**FR - A - 2 402 393**
**GB - A - 2 068 206**
**GB - A - 2 088 684**

(73) Patentinhaber: **Klöckner-Humboldt-Deutz AG**
**Zweigniederlassung Fahr, D-7702 Gottmadingen (DE)**

(72) Erfinder: **Ruprecht, Hermann,**
**Joh.-Seb.-Bach-Strasse 14, D-7700 Singen/Htwl (DE)**
Erfinder: **Maier, Martin, Hilzingerstrasse 23,**
**D-7702 Gottmadingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine fahrbare, von einem Schlepper oder dgl. gezogene Landmaschine mit den Merkmalen nach dem Oberbegriff des geltenden Patentanspruchs 1.

Landmaschinen der in Rede stehenden Gattung dienen dem Zweck, landwirtschaftliches Erntegut zu mähen und bedarfsweise gleichzeitig zu konditionieren (aufzubereiten), um den Trocknungsvorgang zu beschleunigen.

Es sind mehrere Bauweisen derartiger Landmaschinen, die über ein Mähwerk und über eine Konditioniereinrichtung verfügen, bekannt geworden. Diese Konstruktionen sind mit einer Reihe von Nachteilen behaftet.

Beispielsweise zeigt die DE-OS 2 750 094 eine fahrbare Landmaschine mit einem Fingerbalkenmähwerk und nachgeschalteten, der Aufbereitung dienenden Quetschwalzen. Bei dieser Maschine sind die notwendigen Antriebsmittel für das Mähwerk und die Konditioniereinrichtung seitlich von diesen Baugruppen liegend angeordnet. Daraus resultiert insbesondere, da die Landmaschine eine maximale Transportbreite nicht überschreiten darf, eine verhältnismässig geringe Arbeitsbreite. Ferner sind die Quetschwalzen zum Konditionieren des Erntegutes zwar drehantreibbar, jedoch feststehend am verfahrbaren Hauptrahmen angeordnet, so dass das gemähte Erntegut in jedem Fall konditioniert wird. Diese bekannte Landmaschine kann daher nicht als reine Mähmaschine eingesetzt werden. Zum Überführen des Erntegutes vom Mähwerk in den Einzugsbereich der Quetschwalzen sind zusätzliche Förderelemente wie z.B. eine Haspel erforderlich, die das Gewicht des Mähwerks erheblich erhöhen. Demzufolge sind aufwendige Entlastungseinrichtungen notwendig, damit sich das Mähwerk den Bodenunebenheiten einigermassen anpassen kann.

Das vorstehend Gesagte trifft prinzipiell auch für die Anordnung nach der DE-OS 2 151 156 zu. Auch diese Bauart zeichnet sich durch eine relativ geringe Arbeitsbreite des Mähwerks aus. Erschwerend kommt hinzu, dass das Mähwerk und die Konditioniereinrichtung in einem gemeinsamen Hilfsrahmen gelagert sind, der in bezug auf den Hauptrahmen über Parallelogrammlenker höhenbeweglich geführt ist. Auch hier sind aufwendige Entlastungseinrichtungen notwendig. Zudem wird auch hier das Erntegut in jedem Fall konditioniert.

Mit der Landmaschine nach der DE-OS 2 814 399 ist zwar eine relativ grosse Arbeitsbreite erzielbar, jedoch ist auch bei dieser Maschine das Mähwerk und die nachgeschaltete Konditioniereinrichtung in einem gemeinsamen Hilfsrahmen untergebracht. Dies bedingt aufwendige Entlastungseinrichtungen. Erschwerend kommt bei dieser Konstruktion hinzu, dass das Gewicht der Antriebsgelenkwelle für die Mähvorrichtung sowie das Gewicht des Getriebes für den Antrieb des Mähwerks und der Konditioniereinrichtung voll – und zwar einseitig – auf dem Hilfsrahmen lastet

(DE-OS 2 814 399, Prospekt der Fa. Kuhn Faucheuse — Conditioneuse FC 300 mit dem Druckvermerk 35 80 F 282).

Die der Erfindung zugrunde liegende Aufgabe besteht darin, eine Antriebsvorrichtung für das Mähwerk und die Konditioniereinrichtung einer Landmaschine der in Rede stehenden Gattung zu schaffen, die die maximal mögliche Mähwerksbreite nicht einschränkt und bei der das Mähwerk den Bodenunebenheiten leicht folgen kann sowie bedarfsweise ohne die Konditioniereinrichtung betrieben werden kann.

Mit den im kennzeichnenden Teil des Hauptanspruchs angegebenen Massnahmen wird erreicht, dass die Mähwerksbreite der zulässigen Transportbreite der Landmaschine entsprechen kann und dass das Mähwerk, das im wesentlichen nur mit seinem Eigengewicht auf der Bodenoberfläche aufliegt, dieser leicht folgen kann. Durch die unabhängige Lagerung und den getrennten Antrieb für das Mähwerk und die Konditioniereinrichtung kann die Konditioniereinrichtung leicht in eine Ausserbetriebsstellung verbracht werden, so dass ohne zu konditionieren gemäht werden kann. Durch die vorgeschlagene Anordnung wird ein klar gegliederter Leistungsfluss erreicht.

Vorteilhafte bauliche Ausgestaltungen der vorgeschlagenen Landmaschine sind den Unteransprüchen 2–7 zu entnehmen.

Weitere, für die Erfindung wesentliche Merkmale sowie die daraus resultierenden Vorteile sind der nachfolgenden Beschreibung anhand eines Ausführungsbeispiels der Erfindung zu entnehmen. Es zeigen:

Fig. 1 eine gezogene Landmaschine mit einem Mähwerk und einer Konditioniereinrichtung in schematischer Draufsicht;

Fig. 2 die Landmaschine nach Fig. 1 in schematischer Rückansicht;

Fig. 3 Einzelheiten der Landmaschine nach Fig. 1 in teilweise geschnittener Draufsicht;

Fig. 4 die Anordnung nach Fig. 3 in Rückansicht ohne die Konditioniereinrichtung;

Fig. 5 eine Seitenansicht der Landmaschine nach Fig. 3;

Fig. 6 einen Schnitt entlang der Linie VI-VI in Fig. 1;

Fig. 7 die Landmaschine mit Mähwerk und Konditioniereinrichtung in ausgehobener Transportstellung;

Fig. 8 die Landmaschine nach Fig. 7 mit Mitteln zum Verriegeln der Konditioniereinrichtung in der der Transportstellung entsprechenden Lage und

Fig. 9 die Landmaschine mit dem in Arbeitsstellung befindlichen Mähwerk und angebauter, jedoch unwirksamer Konditioniereinrichtung.

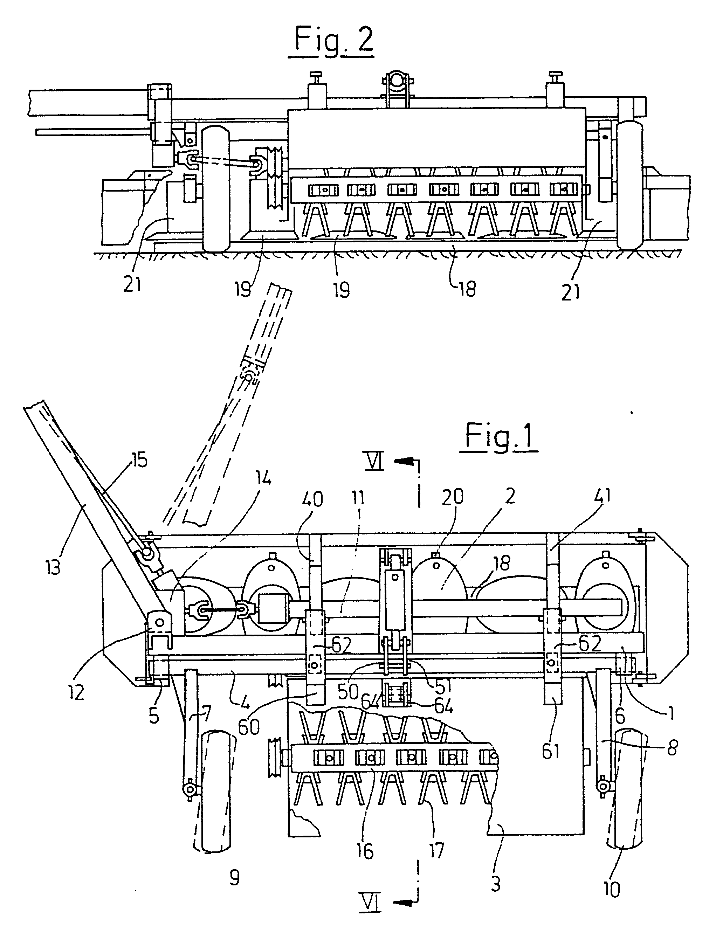

Die Fig. 1–5 zeigen den grundsätzlichen Aufbau einer Landmaschine mit einem Mähwerk und einer Konditioniereinrichtung.

Die in Fig. 1 in schematischer Draufsicht wiedergegebene Landmaschine verfügt über einen Hauptrahmen 1, dem, bezogen auf die Fahrtrichtung, ein Mähwerk 2 in noch näher zu beschreibender Weise vorgelagert und eine Konditioniereinrichtung 3 in ebenfalls noch näher zu beschreibender Weise nachgeschaltet ist.

Parallel zum Hauptrahmen 1 erstreckt sich ein Hilfsrahmen 4. Der Hilfsrahmen 4 ist in Lagern 5 und 6 des Hauptrahmens 1 schwenkbeweglich gehaltert. Am Hilfsrahmen 4 sind in der Nähe der Lager 5 und 6 Ausleger 7 und 8 befestigt. Die Ausleger 7 und 8 tragen an ihren freien, nach unten weisenden Enden Laufräder 9 und 10, über die sich die Landmaschine auf der Bodenoberfläche abstützt.

Analog zum Hilfsrahmen 4 ist ein Mähwerksrahmen 11 des Mähwerks 2 relativ beweglich zum Hauptrahmen 1 an letzterem angelenkt.

Am in der Zeichnung links liegenden Ende des Hauptrahmens 1 ist ein zusätzliches Lager 12 vorgesehen, das eine teilweise dargestellte Zugvorrichtung 13 schwenk- und feststellbar aufnimmt. Die Zugvorrichtung 13 ist mit einem selbst nicht dargestellten Schlepper oder dgl. verbunden. Die Zugvorrichtung 13 kann aus der dargestellten Lage, die der Arbeitsstellung, in der die Landmaschine seitlich vom Schlepper arbeitet, entspricht, in eine in der Zeichnung gestrichelt wiedergegebene Position verschwenkt werden. Diese Endlage gibt die Transportstellung wieder, in der die Landmaschine etwa mittig zum Schlepper läuft.

Am in der Zeichnung links liegenden Ende des Hauptrahmens 1 ist ferner ein Getriebe 14 angeflanscht. Das Getriebe 14 steht über eine Antriebswelle 15, die als Gelenkwelle ausgebildet ist, mit dem selbst nicht dargestellten motorischen Antrieb des Schleppers in Antriebsverbindung. Vom Getriebe 14 ausgehend erfolgt der Antrieb des Mähwerks 2 und der Konditioniereinrichtung 3.

Im dargestellten Ausführungsbeispiel besteht die Konditioniereinrichtung 3 aus einer Rotorwelle 16, die mit einer Vielzahl von etwa V-förmig gespreizten Mitnehmern 17 bestückt ist. Die umlaufenden Mitnehmer 17 erfassen das vom Mähwerk 2 geschnittene und in Schwaden auf der Bodenoberfläche abgelegte Erntegut, wobei es unter gleichzeitiger Aufbereitung (Konditionierung) «über Kopf» gefördert und erneut auf der Bodenoberfläche abgelegt wird. Aufbau und Wirkungsweise einer derartigen Konditioniereinrichtung sind grundsätzlich bekannt. Anstelle der mit den vorgeschlagenen Mitnehmern bestückten Rotorwelle kann auch eine andere Bauart (z.B. ein Bürstenrotor) Verwendung finden.

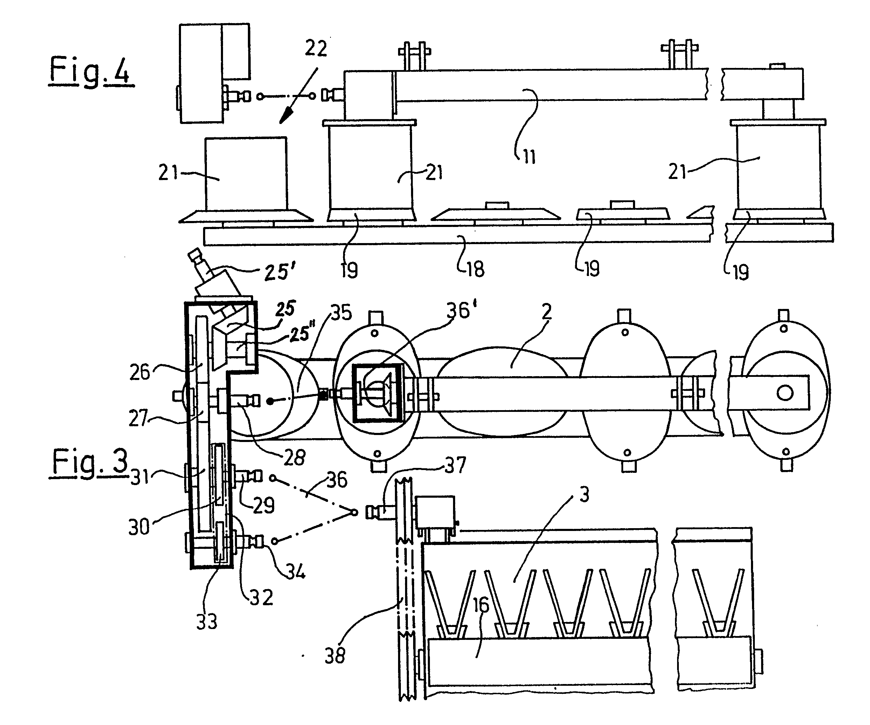

Die Mähwerkskonstruktion geht insbesondere aus den Fig. 1 und 4 hervor. Bei dem Mähwerk 2 handelt es sich um eine kombinierte Bauweise eines Trommel- und Scheibenmähwerks. Das Mähwerk 2 stützt sich in seiner Arbeitsstellung über einen Mähbalken 18, der sich über etwa die gesamte Mähbreite erstreckt, auf der Bodenoberfläche ab. Der Mähbalken 18 verfügt über Lager- und Antriebselemente für mehrere (im dargestellten Ausführungsbeispiel sechs) Mähscheiben 19. Die Mähscheiben 19 rotieren in einer Ebene unmittelbar oberhalb des Mähbalkens 18. Sie haben eine ovale Form und sind mit Schneidmessern 20 bestückt. Zum besseren Abtransport des geschnittenen Gutes zur Mitte hin sind auf die jeweils aussen liegenden Mähscheiben Trommeln 21 aufgesetzt.

Bedarfsweise können auch die jeweils nächst innen liegenden Mähscheiben 19 mit Trommeln 21 bestückt werden. In diesem Zusammenhang sei auf ein konstruktiv wesentliches Merkmal des beschriebenen Mähwerks 2 hingewiesen. Wie insbesondere aus Fig. 4 ersichtlich, sind drei der vorhandenen Mähscheiben 19 mit Trommeln 21 bestückt. Es handelt sich hierbei – gesehen von links nach rechts bezogen auf die Zeichnung – um die ersten beiden Mähscheiben 19 sowie um die rechts liegende, äussere Mähscheibe 19.

Während sich der Mähbalken 18 über die gesamte Mähwerksbreite erstreckt, verbindet der Mähwerksrahmen 11 lediglich die – bezogen auf die Darstellung nach Fig. 4 – die linke, zweite Trommel 21 mit der äusseren, rechts liegenden Trommel 21. Dies bedeutet mit anderen Worten, dass der Mähwerksrahmen 11 um etwa die der Arbeitsbreite der ersten Mähscheibe 19 entsprechende Distanz kürzer gehalten ist als der Mähbalken 18. Auf diese Weise wird über der ersten Trommel 21 ein mit dem Pfeil 22 angedeuteter Freiraum geschaffen, in den das Getriebe 14, welches am Hauptrahmen 1 angeflanscht ist, hineinragen kann. Um den Freiraum 22 noch zu vergrössern, ist die Bauhöhe der in Fig. 4 links liegenden, ersten Trommel 21 niedriger gehalten (Oberkante 24), als die der übrigen Trommeln 21. Dies bedeutet aber, dass die verfügbare Arbeitsbreite der maximal zulässigen Transportbreite voll entsprechen kann, weil sämtliche Baugruppen der Landmaschine innerhalb der Mähwerksbreite untergebracht sind. Im übrigen bildet der Mähwerksrahmen 11 zusammen mit der zweiten Trommel 21 und der rechts aussen liegenden Trommel 21 sowie dem Mähbalken 18 einen in sich geschlossenen, stabilen, etwa rechteckigen Rahmen. Trotz leichter, kompakter Bauweise bei geringer Bauhöhe zeichnet sich das Mähwerk 2 durch eine grosse Arbeitsbreite, geringem baulichem Aufwand und grosse Stabilität aus.

Die Antriebselemente für das Mähwerk 2 und die Konditioniereinrichtung 3 sind folgendermassen ausgebildet:

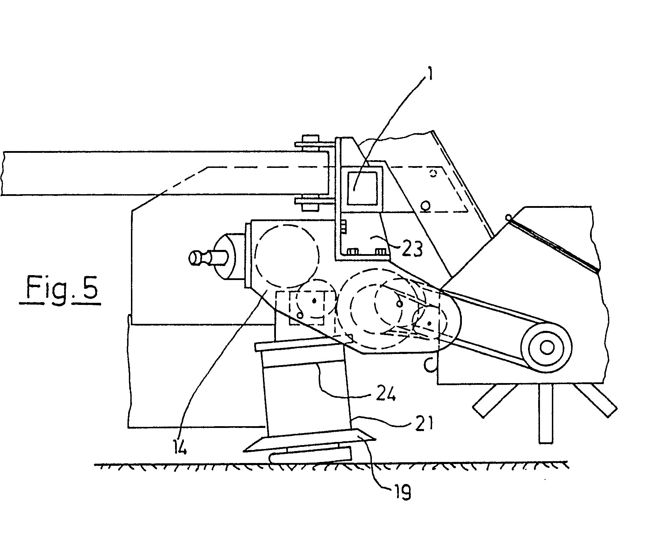

Insbesondere Fig. 5 zeigt, dass am Hauptrahmen 1 – wie bereits erwähnt – das Getriebe 14 angeflanscht ist. Die Verbindung kann über eine zusätzliche Lagerkonsole 23 erfolgen. Das Getriebe 14 (vergl. Fig. 3) verfügt über einen Eingangs-Kegelradtrieb 25, über den die Antriebswelle 15 (vergl. Fig. 1) mit einem ersten Stirnrad 26 in Antriebsverbindung steht. Der Kegelradtrieb 25 weist eine Eingangswelle 25' auf, die, um Ungleichförmigkeiten zu vermeiden, zur Gelenkwelle 15 gleichgerichtet verläuft. Das Stirnrad 26 ist auf einer Zwischenwelle 25" montiert und steht mit einem weiteren Stirnrad 27 in kämmender Verbindung. Das Stirnrad 27 ist drehfest auf einem Antriebswellenstummel 28 montiert. Auf einem weiteren Antriebswellenstummel 29 sind zwei Stirnräder 30 und 31 unverdrehbar gehalten. Das Stirnrad 31 steht mit dem Stirnrad 27 in ständiger Antriebsverbindung.

Das Stirnrad 30 steht über einen Hülltrieb 32 (Ketten- bzw. Zahnriemen) mit einem zusätzlichen Stirnrad 33 in treibender Verbindung. Auch dieses Stirnrad 33 ist einem Antriebswellenstummel 34 drehfest zugeordnet. Eine erste, längenveränderliche Gelenkwelle 35 verbindet den Antriebswellenstummel 28 mit einer Eingangswelle 36' des Mähwerks 2.

Eine zweite, ebenfalls längenveränderliche Gelenkwelle 36 steht wahlweise entweder mit dem Antriebswellenstummel 29 oder dem Antriebswellenstummel 34 einerseits in treibender Verbindung. Anderenends ist die Gelenkwelle 36 mit einer Vorgelegewelle 37 verbunden, über die, zusammen mit einem Hülltrieb 38 (Ketten- oder Zahnriementrieb) der Antrieb der Rotorwelle 16 der Konditioniereinrichtung erfolgt. Durch die gegebene Umsteckmöglichkeit der Gelenkwelle 36 kann die Rotorwelle 16 mit unterschiedlichen Drehzahlen angetrieben werden. Steht die Gelenkwelle 36 zu diesem Zweck mit dem Antriebswellenstummel 34 in Verbindung, dreht die Rotorwelle 16 mit höchster Drehzahl. Wird die Gelenkwelle 36 mit dem Antriebswellenstummel 29 in Verbindung gebracht, erfolgt der Antrieb der Rotorwelle 16 mit niedrigerer Drehzahl. Auf diese Weise ist eine Beeinflussung der Aufbereitungswirkung der Rotorwelle 16 bzw. der Mitnehmer 17 gegeben.

Wie vorstehend angedeutet, erfolgt der Antrieb der Mähscheiben 19 des Mähwerks 2 von der Eingangswelle 36' ausgehend. Der Antrieb der (bezogen auf Fig. 4, gesehen von links nach rechts) zweiten Mähscheibe 19 erfolgt über eine nicht näher dargestellte, vertikal stehende Welle. Der Antrieb der übrigen Mähscheiben 19 wird von unten, d.h. von Antriebsmitteln, die im Mähwerksbalken 18 vorgesehen sind, vorgenommen.

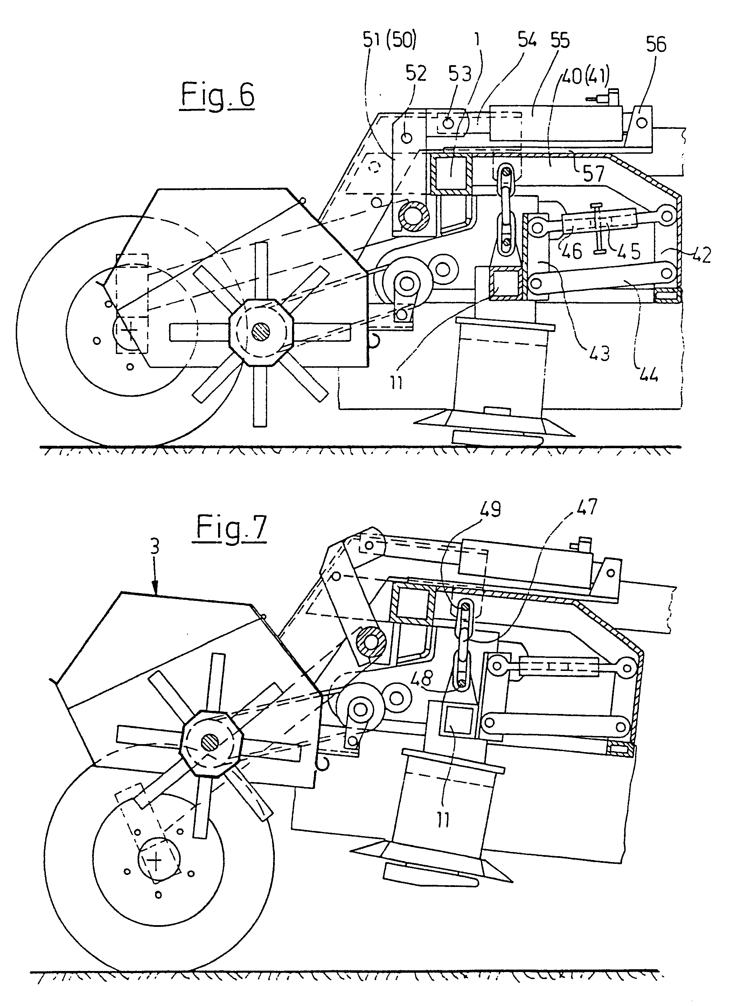

Nachfolgend wird anhand der Fig. 6 und 7 die Anlenkung des Mähwerks 2 in bezug auf den Hauptrahmen 1 näher erläutert.

Am Hauptrahmen 1 sind – bezogen auf die Fahrtrichtung – zwei nach vorne ragende Ausleger 40 und 41 fest, z.B. durch Schweissen, angebracht. Die Lage der Ausleger 40 und 41 ist insbesondere der Fig. 1 zu entnehmen.

Insbesondere aus der Darstellung nach Fig. 6 geht hervor, dass die Ausleger 40 und 41 sich nach unten erstreckende Endteile 42 aufweisen. Jeweils einem Endteil 42 steht eine im wesentlichen vertikal gerichtete Strebe 43 gegenüber, die, wie ebenfalls aus Fig. 6 hervorgeht, am Mähwerksrahmen 11, z.B. ebenfalls durch Schweissen, befestigt ist. Jedes der Endteile 42 ist mit der gegenüberliegenden Strebe 43 des Mähwerks 2 über einen unteren Parallelogrammlenker 44 und einen oberen Parallelogrammlenker 45 verbunden. Die Länge der oben liegenden Parallelogrammlenker 45 ist jeweils durch eine verdrehbare Hülse 46 einstellbar, so dass auf diese Weise die Schräglage des Mähwerks 2 in bezug auf die Bodenoberfläche und damit in Grenzen auch die Schnitthöhe des Mähwerks verändert werden kann.

Um zu verhindern, dass das Mähwerk 2 beim Anheben in seine der Darstellung nach Fig. 7 entsprechende Transportlage nach unten absinkt, sind zwischen den Auslegern 40 und 41 und dem Mähwerksrahmen 11 zwei Ketten 47 eingeschaltet. Die jeweils endseitigen Kettenglieder der Ketten 47 sind durch Steckbolzen 48 am Mähwerksrahmen 11 bzw. durch Steckbolzen 49 an den Auslegern 40 und 41 gesichert. Durch die vorstehend geschilderte Anlenkung des Mähwerks 2 ist sichergestellt, dass dies den Bodenunebenheiten gut folgen kann, andererseits aber auch in eine angehobene Transportlage überführt werden kann.

Im Zusammenhang mit der Darstellung nach Fig. 1 wurde erwähnt, dass der Hilfsrahmen 4, der die Laufräder 9 und 10 trägt, gegenüber dem Hauptrahmen 1 schwenkbeweglich angeordnet ist. Etwa in der Mitte des Hilfsrahmens 4 befinden sich vertikal nach oben gerichtete, feststehende Laschen 50 und 51, die einen geringen seitlichen Abstand voneinander aufweisen. Die Laschen 50 und 51 sind in ihrem oberen Bereich mit Bolzen 52 und 53 miteinander verbunden (Fig. 6).

Der Bolzen 53 durchgreift eine Kolbenstange 54 eines einfach wirkenden Hydraulikzylinders 55. Das – bezogen auf die Fahrtrichtung – vordere Ende des Hydraulikzylinders 55 ist in einem Lagerbock 56 schwenkbeweglich gehalten. Der Lagerbock 56 ist fester Bestandteil einer unterhalb des Hydraulikzylinders 55 angeordneten Lagerplatte 57, die ihrerseits wiederum am Hauptrahmen 1 befestigt ist.

Bei Beaufschlagung des Hydraulikzylinders 55 wird, wie ohne weiteres ersichtlich, der Hilfsrahmen 4 entgegen dem Uhrzeigersinn verdreht. Die Laufräder 9 und 10 folgen dieser Bewegung, so dass der Hauptrahmen 1, das an ihm angelenkte Mähwerk 2 und die Konditioniereinrichtung 3 in die in Fig. 7 wiedergegebene, angehobene Transportlage überführt wird. Das erneute Absenken in die Arbeitsstellung erfolgt durch den Einfluss des Eigengewichts der Landmaschine, sobald die Hydraulikflüssigkeit über die Anschlussleitung des Hydraulikzylinders 55 entweichen kann.

Die Anlenkung der Konditioniereinrichtung 3 in bezug auf den Hauptrahmen 1 sowie die Möglichkeit, diese Einrichtung ebenfalls gegen unerwünschtes Absinken zu sichern, wird anhand der Fig. 1, 8 und 9 erläutert.

An der Konditioniereinrichtung 3 sind Tragarme 60 und 61 befestigt. Aus der Draufsicht nach Fig. 1 geht hervor, dass der Tragarm 60 mit dem Ausleger 40 und der Tragarm 61 mit dem Ausleger 41 – bezogen auf die Längsrichtung bzw. Fahrtrichtung der Maschine – auf gemeinsamen Symmetrieachsen liegen. Die obenliegenden, abgewinkelten und sich demzufolge nach vorne erstreckenden Enden 62 der Tragarme 60 und 61 sind mit nach unten weisenden, offenen Fangtaschen 63 versehen. Die Fangtaschen 63 nehmen die Ausleger 40 und 41 zwischen sich auf, wobei die oberen Steckbolzen 49, die auch zur Sicherung der Ketten dienen, sowohl die Fangtaschen 63 als auch die Ausleger 40 und 41 durchgreifen. Im übrigen sind diese Verbindungen als lösbare Steckverbindungen ausgebildet, so dass die Konditioniereinrichtung 3 relativ einfach von den Auslegern 40 und 41 gelöst werden kann.

Wie vorstehend beschrieben, ist die Verbindung der Konditioniereinrichtung 3 mit dem Hauptrahmen 1 so getroffen, dass eine Relativbewegung der Konditioniereinrichtung 3 in bezug auf den Hauptrahmen 1 möglich ist. Erläuternd sei aber erwähnt, dass sich die Konditioniereinrichtung 3 während des normalen Betriebes auf dem Hauptrahmen 1 in der Weise abstützt, dass die Enden 62 der Tragarme 60 und 61 auf der Oberseite des Hauptrahmens 1 anliegen. Wesentlich ist ferner, dass das Mähwerk vom Gewicht der Konditioniereinrichtung völlig entlastet ist.

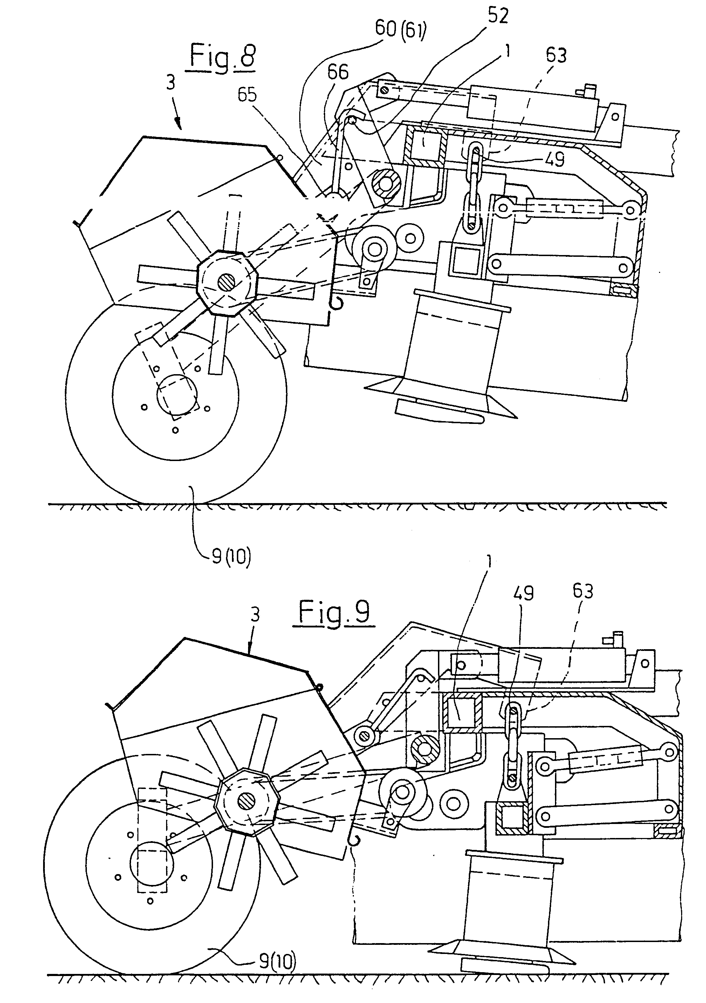

In der landwirtschaftlichen Praxis kommt es häufiger vor, das Erntegut geerntet werden muss, ohne dass dieses gleichzeitig aufbereitet (konditioniert) werden soll. Um es den Landwirten in diesen Fällen zu ersparen, die Konditioniereinrichtung abbauen zu müssen, ist bei der vorgeschlagenen Landmaschine eine einfach zu handhabende Verriegelungseinrichtung vorgesehen, die sicherstellt, dass die Konditioniereinrichtung in ausgehobenem Zustand, d.h. in einer unwirksamen Stellung verbleibt, während das Mähwerk zum Ernten des Gutes auf die Bodenoberfläche abgesenkt werden kann. Diese mögliche Betriebsstellung ist in Fig. 9 wiedergegeben. In dieser Lage ist die Antriebsverbindung für die Konditioniereinrichtung gelöst.

Zur Erzielung des vorbeschriebenen Zwecks ist an der Konditioniereinrichtung 3 zwischen zwei Wangen 64 auf einem Lagerbolzen 65 ein Verriegelungshaken 66 schwenkbeweglich gelagert (Fig. 8). Die Länge des Verriegelungshakens 66 ist hierbei so bemessen, dass er den Bolzen 52 dann übergreifen kann, wenn der Hauptrahmen 1 der Landmaschine in seiner der Transportstellung entsprechenden Lage ausgehoben ist. Diese Position, bei der der Verriegelungshaken 66 den Bolzen 52 übergreift, ist in Fig. 8 wiedergegeben. Aus dieser Stelle kann das Mähwerk 2 durch Absenken des Hauptrahmens 1 in Kontakt zur Bodenoberfläche gebracht werden, wobei, wie aus Fig. 9 ersichtlich ist, die Konditioniereinrichtung 3 am Absenken gehindert wird. Es kann dann gemäht werden, ohne dass das Erntegut gleichzeitig konditioniert wird.

Bei der vorgeschlagenen Anordnung ist wesentlich, dass sämtliche Antriebselemente für das Mähwerk 2 und die Konditioniereinrichtung 3 am Hauptrahmen 1 und zwar innerhalb der wirksamen Mähwerksbreite, untergebracht sind. Dieser gewichtsmässig hohe Anteil der Landmaschine wird über die Laufräder 9 und 10 abgestützt. Das Mähwerk 2 und die Konditioniereinrichtung 3 sind demzufolge von diesem Gewichtsanteil entlastet. Ferner ist das Mähwerk und die Konditioniereinrichtung getrennt am Hauptrahmen 1 befestigt. Dies bringt entscheidende Vorteile mit sich. Einmal kann das Mähwerk den Bodenunebenheiten leicht folgen und zum anderen kann die Konditioniereinrichtung auch dann an der Landmaschine verbleiben, wenn sie selbst nicht eingesetzt werden soll. Die getroffene Anordnung bringt ferner den grossen Vorteil mit sich, dass auf aufwendige Entlastungseinrichtungen für das Mähwerk und/oder die Konditioniereinrichtung völlig verzichtet werden kann. Hierbei sie ergänzend darauf hingewiesen, dass notwendige Schutzeinrichtungen (Schutzbügel, -tücher od. dgl.) am Hauptrahmen 1 befestigt werden können, d.h., dass auch diese Einrichtungen das Gewicht des Mähwerks nicht beeinflussen. Schliesslich kann die verwendete Konditioniereinrichtung, die beim dargestellten Ausführungsbeispiel mit etwa V-förmig gespreizten Mitnehmern bestückt ist, jederzeit gegen eine Konditioniereinrichtung anderer Bauart, so z.B. einer solchen, bei der Kunststoffbürsten Verwendung finden, ausgetauscht werden. Dies insbesondere auch deswegen, da in diesen Fällen nicht für jede Konditioniereinrichtung ein gesondertes Getriebe zum Antrieb mit unterschiedlichen Drehzahlen vorgesehen werden muss. Noch einfacher gestalten sich die Verhältnisse, wenn lediglich verschiedene Rotorwellen mit unterschiedlich gestalteten Konditionierwerkzeugen ausgetauscht werden, ansonsten die Konditioniereinrichtung aber unverändert beibehalten wird.

**Patentansprüche**

1. Fahrbare, von einem Schlepper od. dgl. gezogene Landmaschine mit einer verschwenk- und feststellbaren Zugvorrichtung (13), die an einem Hauptrahmen (1) angelenkt ist, einem – bezogen auf die Fahrtrichtung – dem Hauptrahmen (1) vorgelagerten Mähwerk (2) mit mehreren Mähscheiben (19) sowie einer nachgeschalteten Konditioniereinrichtung (3) und einem Getriebe (14) zum Antrieb des Mähwerks (2) und der Konditioniereinrichtung (3), das über eine Gelenkwelle (15) mit dem motorischen Antrieb des Schleppers in Verbindung steht, dadurch gekennzeichnet, dass das Getriebe (14) am Hauptrahmen (1) innerhalb der Arbeitsbreite des Mähwerks (2) liegend befestigt ist, dass das Mähwerk (2) und die Konditioniereinrichtung (3) unabhängig voneinander am Hauptrahmen (1) höhenbeweglich angelenkt sind und dass eine Eingangswelle (36') des Mähwerks über eine erste, längenveränderliche Gelenkwelle (35) und eine Vorgelegewelle (37) der Konditioniereinrichtung (3) über eine zweite, längenveränderliche Gelenkwelle (36) mit dem Getriebe (14) in Antriebsverbindung steht.

2. Landmaschine nach Anspruch 1, dadurch gekennzeichnet, dass die Eingangswelle (36') des Mähwerks (2) einer der Mähscheiben (19) zugeordnet ist, die zwischen der – bezogen auf die Fahrtrichtung – innersten und äussersten Mähscheibe (19) liegen.

3. Landmaschine nach Anspruch 2, dadurch gekennzeichnet, dass die Eingangswelle (36') mit der – bezogen auf die Fahrtrichtung – der innersten Mähscheibe (19) folgenden Mähscheibe (19) in Antriebsverbindung steht.

4. Landmaschine nach Anspruch 1, dadurch gekennzeichnet, dass die Gelenkwelle (15) mit einem Kegelradtrieb (25) des Getriebes (14) in Antriebsverbindung steht, dessen Eingangswelle (25') zur Gelenkwelle (15) gleichgerichtet verläuft und dessen Zwischenwelle (25") parallel zum Hauptrahmen (1) verlaufend angeordnet ist.

5. Landmaschine nach Anspruch 4, dadurch gekennzeichnet, dass auf der Zwischenwelle (25") ein Stirnrad (26) drehfest montiert ist, welches mit einem Zwischenrad (27) eines Antriebswellenstummels (28) zum Antrieb des Mähwerks (2) in Antriebsverbindung steht.

6. Landmaschine nach den Ansprüchen 4 und 5, dadurch gekennzeichnet, dass das Zwischenrad (27) mit einem Zahnrad (31) einer ersten Getriebeausgangswelle (29) in Antriebsverbindung steht, wobei auf der ersten Getriebeausgangswelle (29) ein Kettenrad (30) unverdrehbar gehaltert ist, welches über einen Kettentrieb (32) mit einem Kettenrad (33) einer zweiten Getriebeausgangswelle (34) verbunden ist, und dass die Gelenkwelle (36) zum Antrieb der Konditioniereinrichtung (3) wahlweise mit der ersten Getriebeausgangswelle (29) oder der zweiten Getriebeausgangswelle (34) kuppelbar ist.

7. Landmaschine nach Anspruch 1, dadurch gekennzeichnet, dass die Vorgelegewelle (37) über einen Hülltrieb (38) mit einer Rotorwelle (16) der Konditioniereinrichtung (3) in Antriebsverbindung steht.

## Claims

1. Transportable agricultural machine to be towed by a tractor or the like, including a pivotable and securable towing means (13) pivotally mounted on a main frame (1), a mower (2) having a plurality of mower discs (19) and being mounted in front of the main frame (1) – with respect to the direction of travel – as well as a subsequent conditioning device (3) and a gear (14) for driving the mower (2) and the conditioning device (3), which gear is connectable to the motor drive of the tractor via the intermediary of a drive shaft (15), characterised in that the gear (14) is mounted on the main frame (1) so as to lie within the working width of the mower (2), in that the mower (2) and the conditioning device (3) are pivotally mounted on the main frame (1) so as to be vertically displaceable independently of each other, and in that an input shaft (36') of the mower is in driving connection with the gear (14) via the intermediary of a first, longitudinally changeable, universal joint shaft (35), and a transmission shaft (37) of the conditioning device (3) is in driving connection with the gear (14) via the intermediary of a second, longitudinally changeable, universal joint shaft (36).

2. Agricultural machine according to claim 1, characterised in that the input shaft (36') of the mower (2) is associated with one of the mower discs (19) which is disposed between the innermost and outermost mower discs (19) – with respect to the direction of journey.

3. Agricultural machine according to claim 2, characterised in that the input shaft (36') is in driving connection with the mower disc (19) following the innermost mower disc (19) – with respect to the direction of journey.

4. Agricultural machine according to claim 1, characterised in that the drive shaft (15) is in driving connection with a bevel gear drive (25) of the gear (14), the primary shaft (25') of said bevel gear drive extending in the same direction as the drive shaft (15), and the intermediate shaft (25") of said bevel gear drive being disposed so as to extend parallel to the main frame (1).

5. Agricultural machine according to claim 4, characterised in that a spur wheel (26) is non-rotatably mounted on the intermediate shaft (25") and is in driving connection with an intermediate wheel (27) of a drive shaft end (28) for driving the mower (2).

6. Agricultural machine according to claims 4 and 5, characterised in that the intermediate wheel (27) is in driving connection with a toothed wheel (31) of a first gear output shaft (29), a chain wheel (30) being non-rotatably mounted on the first gear output shaft (29) and being connected to a chain wheel (33) of a second gear output shaft (34) via the intermediary of a chain drive (32), and in that the drive shaft (36) for driving the conditioning device (3) is selectively connectable either to the first gear output shaft (29) or to the second gear output shaft (34).

7. Agricultural machine according to claim 1, characterised in that the transmission shaft (37) is in driving connection with a rotor shaft (16) of the conditioning device (3) via the intermediary of an encased drive (38).

## Revendications

1. Machine agricole mobile, tractée par un tracteur ou analogue, avec un dispositif de traction (13) pouvant être pivoté et immobilisé qui est articulé à un châssis principal (1), un dispositif de fauchage (2) précédant, en direction d'avance, le châssis principal (1), avec plusieurs disques de coupe (19) ainsi qu'un dispositif de conditionnement (3) qui le suit et un mécanisme (14) pour l'entraînement du dispositif de fauchage (2) et du dispositif de conditionnement (3), qui est relié, par un arbre articulé (15), à l'entraînement motorisé du tracteur, caractérisée en ce que le mécanisme (14) est fixé sur le châssis principal (1) de manière à se trouver à l'intérieur de la largeur utile du dispositif de fauchage (2), en ce que le dispositif de fauchage (2) et le dispositif de conditionnement (3) sont reliés de manière articulée, mobiles en hauteur, indépendamment l'un de l'autre, sur le châssis principal (1) et en ce qu'un arbre d'entrée (36') du dispositif de fauchage est en liaison motrice, par un premier arbre articulé (35) dont la longueur peut être modifiée, et un arbre de renvoi (37) du dispositif de conditionnement (3) par un second arbre articulé (36) mobile en longueur, avec le mécanisme (14).

2. Machine agricole selon la revendication 1 caractérisée en ce qu'à l'arbre d'entrée (36') du dispositif de fauchage (2) sont affectés certains des disques de coupe (19), qui se trouvent entre les disques de coupe (19) le plus interne et le plus externe, en se référant à la direction d'avance.

3. Machine agricole selon la revendication 2 caractérisée en ce que l'arbre d'entrée (36') se trouve en jonction d'entraînement avec le disque de coupe (19) suivant le disque de coupe le plus interne, en se référant à la direction d'avance.

4. Machine agricole selon la revendication 1 caractérisée en ce que l'arbre articulé (15) est en liaison motrice avec une commande à roues coniques (25) du mécanisme (14), dont l'arbre d'entrée (25') est dirigé dans la même direction que l'arbre articulé (15) et dont l'arbre intermédiaire (25″) est disposé de façon à être parallèle au châssis principal (1).

5. Machine agricole selon la revendication 4 caractérisée en ce que sur l'arbre intermédiaire (25″) est monté, solidaire en rotation, un pignon droit (26) qui est en liaison motrice avec une roue intermédiaire (27) d'un bout d'arbre de transmission (28) pour l'entraînement du dispositif de fauchage.

6. Machine agricole selon l'une quelconque des revendications 4 et 5 caractérisée en ce que la roue intermédiaire (27) se trouve en liaison motrice avec une roue dentée (31) d'un premier arbre de sortie de transmission (29), et sur le premier arbre de sortie de transmission (29) est retenue, non rotative, une roue à chaîne (30) qui est reliée, par un entraînement par chaîne (32), à une roue à chaîne (33) d'un second arbre de sortie de transmission (34) et en ce que l'arbre articulé (36) pour l'entraînement du dispositif de conditionnement (3) peut être couplé, au choix, au premier arbre de sortie de transmission (29) ou au second arbre de sortie de transmission (34).

7. Machine agricole selon la revendication 1 caractérisée en ce que l'arbre de renvoi (37) se trouve en liaison motrice, par une commande enveloppante (38), avec un arbre tournant (16) du dispositif de conditionnement (3).

Fig. 2

Fig.1

Fig.4

Fig.3

Fig.5

Fig.6

Fig.7

Fig.8

Fig.9